## Europäisches Patentamt

## European Patent Office

## Office européen des brevets

(11) Veröffentlichungsnummer: **0 128 123**
**A1**

# (12) EUROPÄISCHE PATENTANMELDUNG

(21) Anmeldenummer: **84810270.3**

(22) Anmeldetag: **30.05.84**

(51) Int. Cl.³: **G 07 C 1/20**
**G 04 G 9/00, G 06 K 7/10**

(30) Priorität: **01.06.83 CH 2988/83**

(43) Veröffentlichungstag der Anmeldung:
**12.12.84 Patentblatt 84/50**

(84) Benannte Vertragsstaaten:
**AT BE CH DE GB IT LI NL SE**

(71) Anmelder: **Autophon A.G.**
**Ziegelmattstrasse 1-15**
**CH-4500 Solothurn 3(CH)**

(71) Anmelder: **Securitas AG**
**Alpenstrasse 20**
**CH-3052 Zollikofen(CH)**

(72) Erfinder: **Spreng, Samuel**
**Brunnadernstrasse 51**
**CH-3006 Bern(CH)**

(72) Erfinder: **Dittli, Emil**
**Haldenstrasse 3**
**CH-8306 Brüttisellen(CH)**

(72) Erfinder: **Hotz, Max**
**Heidenhubelstrasse 24**
**CH-4500 Solothurn(CH)**

(74) Vertreter: **Schweizer, Hans et al,**
**Bovard AG Patentanwälte VSP Optingenstrasse 16**
**CH-3000 Bern 25(CH)**

(54) **Handgerät zur Aufnahme, Speicherung und Übermittlung von Daten und Anwendung dieses Handgerätes als Wächteruhr.**

(57) Das Gerät ist insbesondere als Ersatz für die bisherigen mechanischen Wächteruhren bestimmt. Mit einem optischen, mit infrarot betriebenen Leser (3) werden an den aufzusuchenden Orten angeklebte Aufzeichnungen gelesen und mit Hilfe eines Mikrocomputers gespeichert. Infrarot erlaubt die Verwendung von für das Auge vollständig schwarzen, schwer kopierbaren Aufzeichnungen. Die Ausspeicherung der gelesenen Daten erfolgt über den gleichen Lesekopf, der auch zum Lesen der Aufzeichnungen dient.

FIG. 3

- 1 -

Handgerät zur Aufnahme, Speicherung und Uebermittlung von
Daten und Anwendung dieses Handgerätes als Wächteruhr

Die vorliegende Erfindung betrifft ein Handgerät zur Aufnahme, Speicherung und Uebermittlung von Daten. Ein solches Handgerät ist beispielsweise in der amerikanischen Patentschrift 4 143 417 beschrieben. Jenes Gerät enthält einen Strahlen-Erzeuger und einen Strahlen-Empfänger zur Ablesung von strich-kodierten Aufzeichnungen, ferner einen Speicher und ein Anzeigefeld, wobei mit den abgelesenen Aufzeichnungen im Zusammenhang stehende Daten im Speicher gespeichert werden und ausserdem im Anzeigefeld sichtbar gemacht werden können. Dieses bekannte Gerät dient insbesondere der Aufnahme des Inventars oder der Aufzeichnung von Bestelldaten in einem Warenlager, in welchem die verschiedenen Waren mit einem optisch lesbaren Strich-Kode versehen sind. Mit Hilfe einer am Gerät angebrachten Tastatur können die abgelesenen Aufzeichnungen ergänzt und aus Aufzeichnungen und eingetasteten Werten kombinierte Daten in den Speicher eingespeichert werden.

Das bekannte Handgerät weist auch Mittel auf, um den Speicherinhalt an ein ortsfestes Gerät abzugeben und die betreffenden Daten damit einer Verarbeitungsanlage zuzuführen, von der sie ausgedruckt und/oder sonst, insbesondere statistisch, verarbeitet werden können. Die Uebertragung des Speicherinhalts findet dabei über Kontakte statt.

- 2 -

Aus der deutschen Offenlegungsschrift 30 21 515 ist ein Handgerät zur Ueberwachung der Rundgänge von Wächtern bekannt geworden, mit welchem strich-kodierte, an bestimmten Punkten der Rundgänge fest angebrachte Aufzeichnungen abgelesen werden. Das Handgerät enthält einen Sender und funkt die abgelesenen Daten, ohne sie längere Zeit zu speichern, an eine ortsfeste zentrale Stelle, wo sie verarbeitet werden. Die für die Verarbeitung wesentliche Uhrzeit anlässlich der jeweiligen Ablesungen wird dabei von der zentralen Stelle hinzugefügt. Anlagen mit Funk können jedoch nur verwendet werden, wenn sich ein Rundgang über ein verhältnismässig eng beschränktes Gebiet erstreckt und wenn die Punkte mit den Aufzeichnungen funktechnisch günstig angelegt werden können. Sichtbare strich-kodierte Aufzeichnungen ermöglichen ferner einen Betrug, indem sie fotografisch kopiert und die Kopien durch das Handgerät abgelesen werden können ohne den Rundgang auszuführen.

Die vorliegende Erfindung ermöglicht nun, unter Kombination an sich bekannter, insbesondere in den mechanischen Wächter-Ueberwachungsgeräten enthaltener Merkmale, ein Gerät der zuerst beschriebenen Art derart auszurüsten, dass es zur Wächter-Ueberwachung verwendbar ist und dabei einen Betrug im beschriebenen Sinne praktisch ausschliesst. Die Erfindung betrifft ein Handgerät nach dem Oberbegriff des Patentanspruchs 1 und ist gekennzeichnet durch die im kennzeichnenden Teil des Patentanspruchs 1 aufgeführten Merkmale. In einer besondern Ausführungsform der Erfindung erfolgt sowohl die Ablesung der Aufzeichnungen als auch die Uebertragung der gespeicherten Daten auf ein ortsfestes Gerät mit Hilfe der gleichen Infrarot-Sende- und Empfangseinrichtungen. Weitere besondere Ausführungsformen sind weitern Patentansprüchen zu entnehmen. Die Erfindung betrifft auch die Verwendung eines Handgerätes nach dem Patentanspruch 9 als Wächter-Uhr. Diese

- 3 -

Verwendung ist durch die im kennzeichnenden Teil des Anspruchs 11 aufgeführten Merkmale gekennzeichnet.

Die Erfindung wird nun anhand eines Ausführungsbeispiels erklärt.

Die Figur 1 zeigt das Blockschema eines Handgerätes.

Die Figur 2 zeigt das Blockschema eines ortsfesten Gerätes zur Uebertragung der aus dem Handgerät ausgespeicherten Daten an eine Einrichtung zu deren Weiterverarbeitung.

Die Figur 3 zeigt eine Ansicht des Handgerätes.

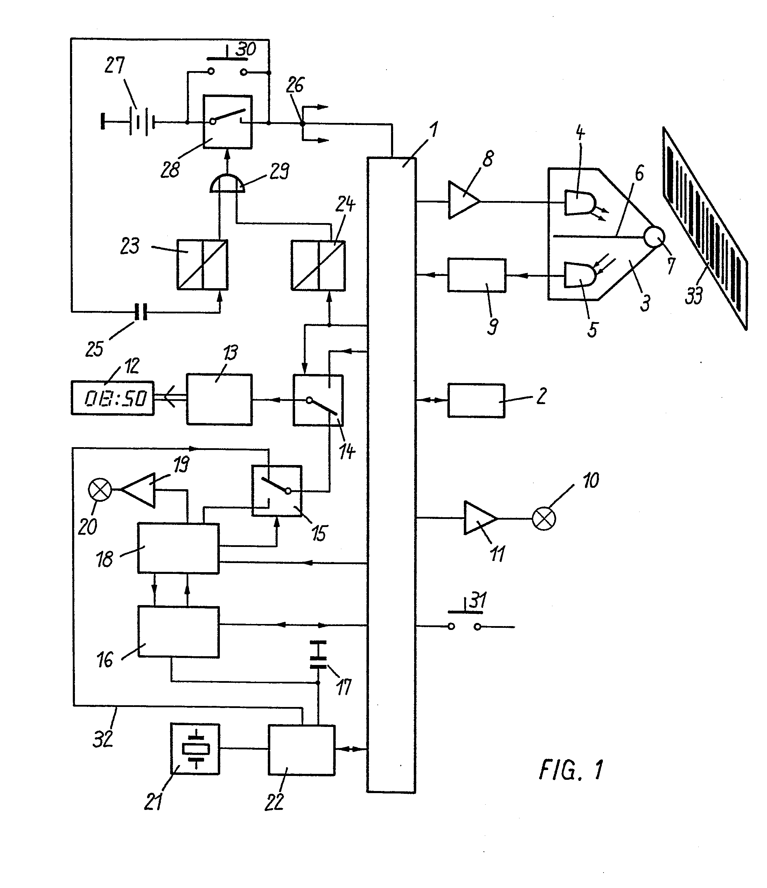

Die Figur 1 zeigt als zentralen Teil des Handgerätes einen Mikroprozessor (CPU) 1. Zusammen mit einem Lesespeicher (ROM) 2, in welchem Programme gespeichert sind, und einem Speicher mit beliebigem Zugriff (RAM) 16 bildet der Mikroprozessor 1 einen Mikrocomputer. Mit Hilfe der Programme steuert der Mikroprozessor die verschiedenen andern Schalteinrichtungen und verarbeitet deren Ausgangssignale. In der Spitze des Handgerätes ist ein handelsüblicher Lesekopf 3 eingebaut, welcher eine Leuchtdiode 4 und einen Fototransistor 5 enthält. Diese fotoelektrischen Umsetzer sind durch eine Zwischenwand 6 getrennt und stehen optisch mit einer Kugel 7 aus durchsichtigem Material in Verbindung. Die von der Leuchtdiode 4 erzeugte Strahlung liegt im infraroten Bereich, und der Fototransistor ist vorwiegend im infraroten Bereich empfindlich. Die Kugel 7 besteht vorzugsweise aus Rubin. Infolge der Verwendung von Infrarot ist die Möglichkeit von Störungen durch die Umgebungsbeleuchtung eingeschränkt. Die Leuchtdiode 4 wird über einen Verstärker 8 direkt vom Mikroprozessor 1 ein- und ausgeschaltet, und der Fototransistor 5 gibt die von ihm aufgrund des Empfangs erzeugten Signale an einen

- 4 -

Impulsformer 9 ab, welcher aus Signalen mit wechselnder Amplitude Impulse mit definierter Amplitude und definierten Flanken erzeugt.

Eine Ueberwachungslampe 10, welche vorzugsweise durch eine Leuchtdiode gebildet ist, wird vom Mikroprozessor mit Hilfe eines Verstärkers 11 gesteuert.

Ein Anzeigefeld 12, welches vorzugsweise aus einer Flüssigkristall-Einrichtung (LCD) besteht, wird von der Anzeige-Steuerung 13 gesteuert. Die die anzuzeigenden Daten enthaltenden Signale werden der Anzeige-Steuerung 13 über einen elektronischen Schalter 14 und gegebenenfalls 15 in später erklärter Weise zugeführt. Der Speicher 16 mit beliebigem Zugriff speichert Daten, die ihm über den Mikroprozessor 1 zugeführt und in umgekehrter Richtung wieder abgerufen werden. Der verwendete Speichertyp benötigt, um die Speicherung aufrecht zu erhalten, die ununterbrochene Zufuhr einer Spannung. Diese Spannung wird durch die besondere, dem Speicher 16 zugeordnete Batterie 17 geliefert.

Der Speicherplatz-Ueberwachungs-Stromkreis 18, welcher ebenfalls durch den Mikroprozessor 1 gesteuert wird, stellt die Zahl der für die Speicherung von abgelesenen Daten zur Verfügung stehenden freien Speicherplätze fest. Eine Alarmlampe 20, vorzugsweise eine Leuchtdiode, wird mit Hilfe eines Verstärkers 19 vom Ueberwachungs-Stromkreis 18 an Spannung gelegt, sofern die Zahl der freien Speicherplätze eine im Programm festgelegte Zahl unterschreitet. Zusätzlich zum Einschalten der Lampe 20 wird der Schalter 15, auf dessen Funktion später zurückgekom-men wird, umgelegt.

- 5 -

Ein mit einem Quarz versehener Schwingungserzeuger 21 steuert einen Zähler 22. Diese beiden zusammen als Uhr wirkenden Einrichtungen werden von der selben Batterie 17 gespeist wie der Speicher 16.

Zwei Zeitkreise 23 und 24 sind der besseren Verständlichkeit halber als monostabile Multivibratoren dargestellt. In Wirklichkeit werden sie vorzugsweise als Zähler ausgebildet, welche die Zeit aufgrund eines durch den Mikroprozessor erzeugten Taktes abmessen. Der Multivibrator 23 wird über den Kondensator 25 in seine Arbeitslage versetzt, wenn das Potential am Punkt 26 von Null auf die Spannung der Batterie 27 ansteigt. Am Punkt 26 ist ausser dem Speicher 16 und der Uhr die Speisung sämtlicher Schaltungsteile angeschlossen. Der Multivibrator 24 wird durch den Mikroprozessor 1 in seinen aktiven Zustand versetzt. Ein elektronischer Schalter 28 ist über ein ODER-Tor 29 so lange eingeschaltet als sich einer der Multivibratoren 23 und/oder 24 im aktiven Zustand befindet und verbindet dabei den Punkt 26 mit der Batterie 27. Parallel zum Schalter 28 ist die Einschalttaste 30 angeordnet.

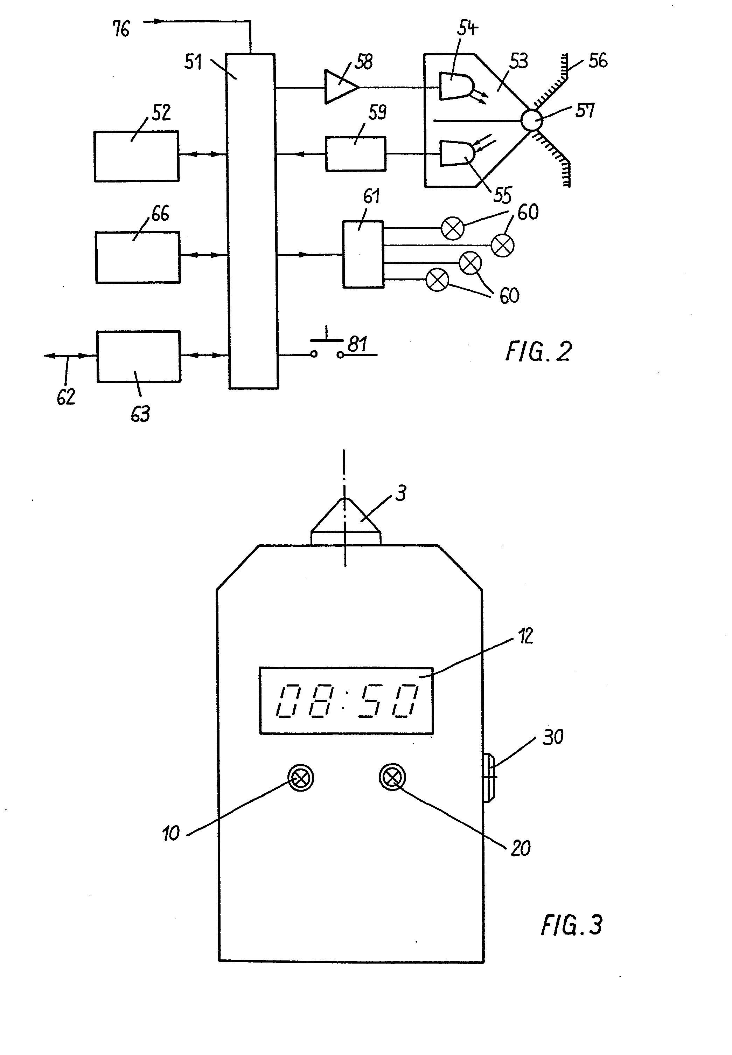

Eine weitere, nur für eine besondere Ausführungsform der Erfindung benötigte und in Figur 3 nicht dargestellte Taste 31 wirkt direkt auf den Mikroprozessor 1 ein.

Das ortsfeste Gerät, dessen Blockschema in Figur 2 dargestellt ist, enthält einen Mikroprozessor 51 mit einem Programmspeicher 52. Wie das Handgerät enthält auch dieses Gerät einen Lesekopf 53 mit einer Leuchtdiode 54 und einem Fototransistor 55, wobei die Diode 54 durch einen Verstärker 58 und der Transitor 55 über einen Impulsformer 59 mit dem Mikroprozessor 51 verbunden sind. Im Gegensatz zum Handgerät ist der Lesekopf 53 mit der Kugel 57 hier nicht wie der in Figur 3 gezeigte Lesekopf 3 vorstehend sondern in einer Mulde 56 des nicht dargestellten

- 6 -

Gehäuses angeordnet. Die Mulde ist dabei in einer Weise bemessen, gemäss welcher die beiden Leseköpfe 3 und 53 derart zusammenfügbar sind, dass sich die Kugeln 7 und 57 berühren und es erlauben, mit Hilfe von Infrarot-Strahlung Daten in der einen oder andern Richtung zwischen den Geräten zu übertragen.

Die ortsfeste Einrichtung gemäss Figur 2 enthält ferner einen Speicher mit beliebigem Zugriff (RAM) 66. Die Speisung der Einrichtungen erfolgt in nicht näher dargestellter Weise bei 76 aus dem Netz. Eine besondere Stromversorgung für den Speicher 66 ist nicht notwendig, da - wie später erklärt wird - bei diesem Gerät der Speicher nur kurzzeitig benötigt wird. Vier Lampen 60 sind mit Hilfe der (gemeinsam dargestellten) vier Verstärker 61 vom Mikroprozessor 51 aus einschaltbar. Die Taste 81 wirkt direkt auf den Mikroprozessor.

Ueber den Aus- und Eingang 62 werden Daten an eine Datenverarbeitungsanlage oder lediglich an eine Schreibeinrichtung abgegeben und diesbezügliche Bereitschaftssignale empfangen. Zwischen dem Mikroprozessor 51 und dem Ein- und Ausgang 62 ist ein Umsetzer 63 vorhanden, welcher die verschiedenen Uebermittlungs-Kodes ineinander umsetzt. Dieser Umsetzer kann - sofern die Uebermittlung über eine Telefonleitung erfolgen soll - als Modem ausgebildet sein, oder er kann ein nicht dargestelltes Modem an den Mikroprozessor anpassen.

Die durch das Handgerät abzulesenden Aufzeichnungen 33 bestehen vorzugsweise aus Klebestreifen, deren Oberfläche eine Farbe aufweist, die dem Auge schwarz erscheint, jedoch infrarote Strahlung reflektiert. Das die abzulesenden Aufzeichnungen darstellende Strichmuster ist mit einer vorzugsweise Kohlenstoff enthaltenden und somit die infrarote Strahlung absorbierenden schwarzen Farbe aufgedruckt. Die Verwendung von zwei verschiedenen schwarzen Farben und von infraroter Strahlung zu deren Abtastung bietet den Vorteil, dass solche Aufzeichnungen mit normalen Kopiermethoden, insbesondere durch Fotografie, nicht kopiert werden können. Sofern Klebstreifen verwendet werden, welche ohne Zerstörung nicht von ihrer Unterlage abgelöst werden können, ist bei der Verwendung des Handgerätes als Wächter-Ueberwachungsgerät ein Betrug ausserordentlich erschwert.

Im Ruhezustand des Handgerätes ist der Schalter 28 in der Sperrstellung, wodurch ausser dem Speicher 16 und der Uhr 21, 22 alles ausser Betrieb ist und der Batterie 27 somit kein Strom entnommen wird. Der Stromverbrauch von Uhr und Speicher ist derart gering, dass die Batterie 17 nur jedes Jahr einmal ausgewechselt werden muss.

Wird nun die Taste 30 kurzzeitig gedrückt, wird sämtlichen Stromkreisen Speisung zugeführt. Ueber den Kondensator 25 wird der Multivibrator 23 in den aktiven Zustand versetzt und betätigt über das Tor 29 den Schalter 28. Die Speisung der Einrichtungen wird damit auch nach dem Loslassen der Taste 30 aufrecht erhalten. Die Zeitkonstante des Multivibrators ist auf ungefähr 3s festgesetzt. Nach Ablauf dieser Zeit kehrt - sofern keine weitern Handlungen vorgenommen werden - das Gerät wiederum in den Ruhezustand zurück.

Während des aktiven Zustandes des Multivibrators 23 werden die Daten der Uhrzeit über die Verbindung 32 und die Schalter 15 und 14 der Anzeige-Steuerung 13 zugeführt, und somit wird am Anzeigefeld 12 die Uhrzeit angezeigt. Der Mikroprozessor 1 lässt während dieser Zeitspanne die Leuchtdiode 4 im Lesekopf 3 periodisch aufleuchten, und zwar mit einer in der Grössenordnung von 100 ms liegenden Periodendauer und einer Einschaltzeit, die mindestens so lang ist, wie die Ausschaltzeit.

- 8 -

Sofern der Lesekopf auf keine reflektierende Unterlage gehalten wird, kann dabei der Fototransistor 5 nichts empfangen.

Bei der Einschaltung wird auch der Speicherplatz-Ueberwachungsstromkreis 18 in Betrieb gesetzt. Sofern dieser Stromkreis feststellt, dass noch genügend - zum Beispiel mehr als 5 % von insgesamt 500 - Speicherplätzen frei sind, löst er keine Wirkungen aus. Ist dagegen die im Programm festgelegte Grenze unterschritten, lässt der Speicherplatz-Ueberwachungsstromkreis über einen Verstärker 19 die Alarmlampe 20 aufleuchten und steuert den Schalter 15 um. Anstelle der die Uhrzeit betreffenden Daten werden damit die der Zahl der freien Speicherplätze betreffenden Daten an die Anzeige-Steuerung 13 angelegt und am Anzeigefeld 12 somit anstelle der Uhrzeit die betreffende Zahl angezeigt. Die das Gerät bedienende Person wird damit in die Lage versetzt abzuschätzen, wann spätestens der Speicherinhalt ausgespeichert und damit der Speicher freigemacht werden muss, sofern Wert darauf gelegt wird, dass sämtliche Ablesungen eingespeichert werden.

Wird während des aktiven Zustandes des Multivibrators 23 die Kugel 7 des Lesekopfs an eine Infrarot reflektierende Fläche gehalten, empfängt der Fototransistor 5 einen Teil der von der Leuchtdiode 4 abgegebenen Strahlung und führt das Empfangsergebnis in der Form eines durch den Impulsformer 9 umgewandelten Signals dem Mikroprozessor 1 zu. Sofern der Mikroprozessor feststellt, dass Strahlung mit Unterbrüchen empfangen wird und dass die Unterbrüche mit den Unterbrüchen des Betriebs der Leuchtdiode 4 zeitlich übereinstimmen, schliesst er auf eine bevorstehende Ablesung von Aufzeichnungen und stellt dementsprechend die Leuchtdiode 4 auf Dauerbetrieb um, betätigt den Schalter 14 und versetzt den Multivibrator 24 in seinen aktiven Zustand. Die Zeit des eingeschalteten Zustandes aller Einrichtungen beginnt damit während der Zeitkonstante des Multivibra-

tors 24, beispielsweise ebenfalls während 3s, erneut zu laufen. Wird nun die Kugel 7 des Lesekopfs 3 über die strich-kodierte Aufzeichnung 33 hinwegbewegt, wird durch die absorbierenden Linien der Aufzeichnung in allgemein bekannter Weise der Empfang von Strahlung durch den Fototransistor 5 entsprechend dem aufgezeichneten Kode unterbrochen. Das Abtastergebnis wird vorerst im Mikroprozessor 1 zwischengespeichert. Es ist bekannt, die Kodezeichen an den beiden Enden der Aufzeichnung derart zu wählen, dass in den zwischengespeicherten Daten die Richtung der Abtastung erkannt werden kann. Anhand von Paritäts-Merkmalen wird die Richtigkeit der Ablesung durch den Mikroprozessor 1 geprüft. Sofern das Prüfungsergebnis in Ordnung ist, wird das Ergebnis der Ablesung, unabhängig von der Abtastrichtung, zusammen mit der Uhrzeit, in der richtigen Reihenfolge an einem freien Platz des Speichers 16 festgehalten. Gleichzeitig wird über den Verstärker 11 die Bestätigungs-Lampe 10 zum Aufleuchten gebracht. Ueber den umgelegten Schalter 14 übermittelt der Mikroprozessor 1 die abgelesene und aufgezeichnete Nummer auch an die Anzeige-Steuerung 13, so dass diese Nummer am Anzeigefeld 12 angezeigt wird. Nach Rückkehr des Multivibrators 24 in den Ruhezustand kehrt das ganze Handgerät wiederum in den Ruhezustand zurück.

Es empfiehlt sich, die abzulesenden Aufzeichnungen von den zu speichernden und dem Anzeigefeld zuzuführenden Daten derart verschieden zu wählen, dass der Zusammenhang nicht naheliegend ist. Damit wird verunmöglicht, dass aufgrund der angezeigten und gespeicherten Daten und der allgemein zugänglichen Kenntnis der normalerweise angewendeten Strich-Kodierung die unsichtbaren Aufzeichnungen rekonstruiert und in betrügerischer Weise gefälschte Aufzeichnungen hergestellt werden können.

Der erwähnte nicht naheliegende Zusammenhang kann dabei von der Verwendung eines vom allgemein üblichen Strich-Kode abweichenden Kodes für die Aufzeichnungen bis zur Umsetzung von Daten nach komplizierten und ohne Computer kaum anzuwendenden Regeln gehen.

Die bis jetzt nicht beschriebene Taste 31 wird nur in einer besondern Ausführungsform der Erfindung, welche später beschrieben ist, verwendet.

Sollen die im Speicher gespeicherten Daten, d.h. die mit der Uhrzeit der Ablesung gepaarten abgelesenen Nummern, aus dem Speicher 16 ausgespeichert und einer Datenverarbeitungseinrichtung zugeführt werden, wird das Handgerät derart mit dem in Figur 2 dargestellten ortsfesten Gerät zusammengebracht, dass sich die beiden Kugeln 7 und 57 berühren. Alsdann wird durch Druck auf die Taste 81 das ortsfeste Gerät eingeschaltet. Der Mikroprozessor 51 gibt nun über den Verstärker 58 eine regelmässige Folge von durch Pausen unterbrochenen Impulsen an die Leuchtdiode 54 ab, welche diese Impulse in der Form von infraroter Strahlung aussendet. Die Periode der Impulse ist dabei wesentlich kürzer als die Periode der Impulse, die das Handgerät während seiner Bereitschaft zur Ablesung von Aufzeichnungen erzeugt. Der eingeschaltete Zustand des ortsfesten Gerätes wird an einer der Lampen 60 angezeigt.

Nun wird das mit dem ortsfesten Gerät in Berührung stehende Handgerät durch Druck auf die Taste 30 eingeschaltet, worauf dessen Leuchtdiode 4 periodisch ein Signal aussendet. Im Gegensatz zum beschriebenen Fall, in welchem der Lesekopf 3 des Gerätes gegen eine reflektierende Unterlage gehalten wird, empfängt nun der Fototransistor 5 Signale auch während der Zeit, während welcher die Leuchtdiode 4 keine Strahlung aussendet. Dies ist ein Kriterium dafür, dass das Handgerät mit dem ortsfesten Gerät optisch gekoppelt ist und dass somit eine Datenübertragung vom Handgerät zum ortsfesten Gerät

- 11 -

stattfinden soll. Das Handgerät stellt infolgedessen die Strahlung der Leuchtdiode 4 vorderhand ab.

Im ortsfesten Gerät wurde am Fototransistor 55 die vorher von der Diode 4 des Handgerätes abgegebene Strahlung empfangen. Der Mikroprozessor 51 stellt nun aufgrund dieses Empfangs fest, dass mit dem ortsfesten Gerät ein Handgerät optisch gekoppelt ist, das zur Abgabe von Daten bereit ist. Nach Ablauf einer Zeitspanne, welche die Periode der vom Handgerät während dessen Bereitschaftszustand erzeugten Impulse überschreitet, gibt der Mikroprozessor 51 des ortsfesten Gerätes anstelle von regelmässigen Impulsen ein mit einem Kode moduliertes Signal an die Leuchtdiode 54 ab, welches Signal die Bereitschaft zur Datenaufnahme beinhaltet. Im Handgerät, welches - wie vorher beschrieben wurde - für einen entsprechenden Empfang vorbereitet ist, bewirkt der Empfang dieses kodierten Signals die Abgabe des gesamten Inhalts des Speichers 16, indem die Leuchtdiode 4 mit einem entsprechenden kodierten Signal moduliert wird. Das entsprechende modulierte Infrarotsignal wird durch den Fototransistor 55 des ortsfesten Gerätes aufgenommen. Dieser Uebermittlungszustand wird dabei durch eine der Lampen 60 angezeigt. Der Inhalt des Speichers 16 wird dabei - ohne vorderhand den Speicher 16 zu löschen - in den Speicher 66 des ortsfesten Gerätes übertragen.

Sofern diese Uebertragung beendet ist und anhand von Paritätsüberprüfungen deren Fehlerfreiheit festgestellt wurde, gibt das ortsfeste Gerät ein Quittungssignal an das Handgerät ab und zeigt die Beendigung der Uebertragung an einer der Lampen 60 an. Aufgrund dieses Quittungssignals wird der Speicher 16 gelöscht, und das Handgerät steht wiederum für Ablesungen zur Verfügung.

- 12 -

Eine fehlerhafte Uebertragung wird mit einer der Lampen 60 angezeigt, worauf die Umspeicherung erneut eingeleitet werden muss.

Sofern im ortsfesten Gerät eine (nicht dargestellte) Uhr vorhanden ist, deren Stand periodisch berichtigt wird oder wenn das Gerät mindestens während der Umspeicherung der Daten Zugang zu einer Uhr hat, kann das Quittungssignal mit einem Zeitzeichen verbunden und mit diesem Zeitzeichen die Uhr im Handgerät selbsttätig gerichtet werden.

Nachdem die mit dem Handgerät abgelesenen Aufzeichnungen nun in den Speicher 66 des ortsfesten Gerätes aufgenommen sind, können sie über die Umsetz-Stromkreise 63 und die Ausgangsleitung 62 zur beliebigen Weiterverarbeitung abgegeben werden. Sofern eine Weitergabe jederzeit möglich ist, kann auf den Speicher 66 verzichtet werden. Das Signal zur Bekanntgabe der Empfangsbereitschaft der auszuspeichernden Daten muss in diesem Falle nicht vom Mikroprozessor 51 geliefert sondern über die Leitung 62 zugeführt werden.

Der Speicher 16 im Handgerät kann ausser zur Speicherung von abgelesenen Daten samt der zugehörigen Uhrzeit auch zur Speicherung von weitern Daten, insbesondere von solchen zur Festlegung eines Tätigkeitsprogramms verwendet werden. Sofern das Gerät als Wächter-Ueberwachungsgerät verwendet wird, kann auf einem Teil der Speicherplätze die Reihenfolge der auf dem Rundgang anzusteuernden Punkte, an denen Aufzeichnungen abzulesen sind, gespeichert werden, wobei diese Reihenfolge täglich gewechselt werden kann und dem Wächter nicht als Schriftstück, welches gegebenenfalls Unbefugten zur Kenntnis gelangen kann, ausgehändigt werden muss. Das Programm, das auch dem Wächter nicht von Anfang an bekannt sein muss, kann in gleicher Weise wie das Signal zur Aufforderung der

- 13 -

Speicherausgabe und das Quittungssignal in das Handgerät eingegeben werden, und durch die besondere Taste 31 kann die Anzeige der nächsten abzulesenden Aufzeichnung veranlasst werden.

Die Erfindung ist natürlich nicht auf die Ausführungsbeispiele beschränkt. Es empfiehlt sich, als Ergänzung an sich bekannte Einrichtungen wie eine Alarmeinrichtung für eine bevorstehende Erschöpfung der Batterien einzubauen. Der Lesekopf muss nicht in der in Figur 3 dargestellten Weise und nicht starr mit dem Handgerät verbunden sein. Er könnte auch seitlich oder in einem mit dem Gerät verbundenen Griffel angeordnet sein. Das Anzeigefeld könnte auch mit Leuchtdioden anstelle von Flüssigkristall-Anzeigen bestückt sein und es könnte mehr als ein Anzeigefeld angeordnet sein, in welchem die jetzt nacheinander angezeigten Daten gleichzeitig angezeigt würden. Es ist auch nicht notwendig, dass das Gerät im Ruhezustand gänzlich ausser Betrieb ist und jeweils durch Tastendruck für einige Sekunden eingeschaltet wird. Es wäre auch möglich, die Uhrzeit dauernd anzuzeigen und in an sich bekannter Weise die der Abtastung dienende Leuchtdiode nur mit kurzen, von verhältnismässig langen Abständen unterbrochenen Impulsen zu betreiben und die Bereitschaft zur Abtastung einzuschalten, sobald einer der kurzen Impulse von einer Aufzeichnung reflektiert würde.

Auch die Verwendung des Handgerätes beschränkt sich nicht auf eine Wächteruhr. Das Gerät könnte auch zur Protokollierung der an einer Zentralstelle erfolgenden Zu- und Wegfahrten von durch strich-kodierte Marken gekennzeichneten Fahrzeugen oder der in einem Lager sich abspielenden Zu- und Abfuhr von Waren dienen. Es wäre auch möglich, das Handgerät zur Aufzeichnung von ausgeführten Routine-Prüfungen an verschiedenen Stellen eines Flugzeugs oder einer andern Maschine zu verwenden, wobei auch der dafür benötigte Zeitaufwand

- 14 -

festgehalten werden könnte. Die abzulesenden Aufzeichnungen können dabei auch derart beschaffen sein, dass der Strich-Kode sichtbar ist.

— 1 —

<u>Patentansprüche</u>

1. Handgerät zur Aufnahme, Speicherung und Uebermittlung von Daten mit ersten, einen Strahlen-Erzeuger (4) und einen Strahlen-Empfänger (5) umfassenden Mitteln (3) zur Ablesung von strich-kodierten Aufzeichnungen (33), mit einem Speicher (16) zur Speicherung und einem Anzeigefeld (12) zur Anzeige von mit den abgelesenen Aufzeichnungen im Zusammenhang stehenden Daten und mit zweiten Mitteln (4) zur Ausgabe des Speicherinhalts an ein ortsfestes Gerät (Fig.2), dadurch gekennzeichnet, dass dieses Handgerät eine Uhr (21, 22) und dritte Mittel (1,2) enthält, welche derart ausgebildet sind, dass sie bei jeder Ablesung die Uhrzeit und die mit der abgelesenen Aufzeichnung im Zusammenhang stehenden Daten miteinander in Beziehung bringen und zusammen speichern und dass die ersten Mittel (4) die Ablesung mit Hilfe von Infrarot-Strahlen vornehmen.

2. Handgerät nach Patentanspruch 1, dadurch gekennzeichnet, dass die dritten Mittel durch einen Mikrocomputer (1,2) gebildet sind.

3. Handgerät nach Patentanspruch 1, dadurch gekennzeichnet, dass der Erzeuger (4) der infraroten Strahlen gemeinsam den ersten und den zweiten Mitteln angehört und dass die dritten Mittel (1,2) derart ausgebildet sind, dass sie diesem Strahlen-Erzeuger (4) anlässlich der Ablesung von Aufzeichnungen (33) ein gleichbleibendes Signal zwecks Beleuchtung der Aufzeichnungen und anlässlich der Ausgabe des Speicherinhalts ein mit den zu übermittelnden Daten moduliertes Signal zuführen.

4. Handgerät nach Patentanspruch 1, mit vierten Mitteln (5,1) zum Empfang und zur Auswertung von durch das ortsfeste Gerät abgegebenen Signalen, dadurch gekennzeichnet, dass der Empfänger (5) der infraroten Strahlen gemeinsam den ersten und den vierten Mitteln angehört und dass dieser Empfänger (5) sowohl die der Ablesung von Aufzeichnungen entsprechenden als auch die durch das ortsfeste Gerät abgegebenen Signale empfängt.

5. Handgerät nach Patentansprüchen 3 und 4, in welchem der Strahlen-Erzeuger (4), solange sich das Gerät in einem zur Ablesung von Aufzeichnungen bereiten Zustand befindet, intermittierend arbeitet und in welchem, sofern vom Strahlen-Empfänger (5) (infolge Reflexion an einer abzulesenden Aufzeichnung) ein Signal empfangen wird, die ersten Mittel (3) in einen aktiven Zustand versetzt werden und somit die dauernde Einschaltung des Strahlen-Empfängers (5) bewirkt wird, gekennzeichnet durch weitere Mittel (1,2), welche die Zeitpunkte des Empfangs von Signalen durch den Strahlen-Empfänger (5) mit den Zeitpunkten des Betriebs des Strahlen-Erzeugers (4) vergleichen und welche, sofern sie (infolge Empfangs von

- 3 -

durch das ortsfeste Gerät ausgesendeten Signalen) den Empfang von Signalen zu Zeitpunkten feststellen, in denen sich der Strahlen-Erzeuger (4) im Ruhezustand befindet, die ersten Mittel (5) in den Ruhezustand versetzen und die zweiten Mittel (4) für den aktiven Zustand und somit für die Abgabe eines modulierten Signals durch den Strahlen-Sender (4) vorbereiten.

6. Handgerät nach Patentanspruch 1, mit einer Einschalttaste (30), gekennzeichnet durch Schaltungsmittel (15,14, 12), welche - gesteuert von der Einschalttaste, von den genannten ersten Mitteln (3) und von Verzögerungsschaltungen (23,24) - nach Betätigung der Einschalttaste die Uhrzeit anzeigen, aufgrund einer stattgefundenen Ablesung von strich-kodierten Aufzeichnungen (33) die Anzeige der Uhrzeit durch die Anzeige der abgelesenen Aufzeichnungen ersetzen und nach Ablauf einer bestimmten Zeit die jeweilige Anzeige wiederum löschen.

7. Handgerät nach Patentanspruch 6, mit Schaltungsmitteln (18), die bei jeder Betätigung der Einschalttaste (30) die Zahl der freien Speicherplätze überprüfen, gekennzeichnet durch weitere Schaltungsmittel (18,15), welche beim Unterschreiten einer bestimmten Zahl freier Speicherplätze die Anzeige der Uhrzeit durch die Anzeige der Anzahl der freien Speicherplätze ersetzen.

0128123

- 4 -

8. Handgerät nach Patentanspruch 1, mit einem Speicher (16), welcher zur Aufrechterhaltung des Speicherzustandes eine Energiezufuhr benötigt, dadurch gekennzeichnet, dass das Gerät zwei Batterien (17,27) enthält, von denen die eine (17) ausschliesslich der Energieversorgung zur Aufrechterhaltung des Speicherzustandes und zur Speisung der Uhr (21,22) dient.

9. Handgerät nach Patentanspruch 4 dadurch gekennzeichnet, dass die vierten Mittel (5,1) vom ortsfesten Gerät (Fig.2) abgegebene Daten in einem diesen Daten vorbehaltenen Bereich des Speichers (16) speichern und dass weitere Mittel (31,1) vorhanden sind, welche die zuletzt genannten Daten aufgrund von diesbezüglichen eingegebenen Befehlen in einer bestimmten Reihenfolge aus dem Speicher (16) abrufen und dem Anzeigefeld (12) zuführen.

10. Handgerät nach Patentanspruch 2, dadurch gekennzeichnet, dass der Mikrocomputer in einer Weise programmiert ist, gemäss welcher er die abgelesenen Daten nach bestimmten Regeln in andere Daten umsetzt und die Speicherung und die Anzeige mit diesen umgesetzten Daten vornimmt.

11. Verwendung des Handgerätes nach Patentanspruch 9 als Wächter-Uhr, dadurch gekennzeichnet, dass die genannten Daten die Bezeichnung der auf dem Rundgang anzusteuernden Punkte, an denen Aufzeichnungen abzulesen sind, betreffen und dass somit am Anzeigefeld jeweils der nächste anzusteuernde Punkt ablesbar ist.

FIG. 1

76

52

51 58 54 53 56

59 57

66 61

55

60

60

81

62 63

*FIG. 2*

3

12

08:50

30

10

20

*FIG.3*

# EUROPÄISCHER RECHERCHENBERICHT

Europäisches Patentamt

EP 84 81 0270

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl. 3) |
|---|---|---|---|
| Y,D | DE-A-2 747 452 (WALD et al.) <br> * Seite 6, Zeile 27 - Seite 8, Zeile 20; Figur 3 * | 1 | G 07 C 1/20 <br> G 04 G 9/00 <br> G 06 K 7/10 |
| A | | 2-5 | |
| | --- | | |
| Y,D | DE-A-3 021 515 (HASLER) <br> * Seite 11, Zeile 8 - Seite 12, Zeile 18; Seite 16, Zeile 3 - Seite 20, Zeile 13; Seite 21, Zeilen 9-13; Ansprüche 1,3; Figuren * | 1 | |
| | --- | | |
| Y | US-A-4 040 034 (BELADY et al.) <br> * Spalte 1, Zeile 58 - Spalte 2, Zeile 29; Figuren * | 1 | |
| | --- | | **RECHERCHIERTE SACHGEBIETE (Int. Cl. 3)** |
| A | GB-A-1 579 111 (PLESSEY) <br> * Seite 1, Zeile 57 - Seite 2, Zeile 7; Seite 3, Zeilen 60-78; Figur 5 * | 1 | G 07 C <br> G 06 K <br> G 04 G <br> G 07 F <br> E 05 B |
| | --- | | |
| A | US-A-3 999 050 (PITRODA) <br> * Spalte 1, Zeile 63 - Spalte 3, Zeile 16; Figuren 1,2 * | 1,2 | |
| | --- | | |
| A | WO-A-8 000 628 (NCR) <br> * Seite 2, Zeile 18 - Seite 3, Zeile 27; Figur 1 * | 1-4 | |
| | ---     -/- | | |

Der vorliegende Recherchenbericht wurde für alle Patentansprüche erstellt.

| Recherchenort <br> DEN HAAG | Abschlußdatum der Recherche <br> 07-09-1984 | Prüfer <br> MEYL D. |
|---|---|---|

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 038 425 (PORST)<br>* Seite 8, Zeile 6 - Seite 9, Zeile 5; Figur 3 * | 1 | |
| A | DE-A-2 807 830 (PLESSEY)<br>* Seite 4, Zeile 7 - Seite 7, Zeile 22; Figuren * | 1,2,8 | |
| A | GB-A-2 082 804 (TIMEX)<br>* Seite 1, Zeilen 87-118; Ansprüche; Figuren 6,15,19 * | 1 | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 07-09-1984 | MEYL D. |